# EUROPEAN PATENT APPLICATION

(11) **EP 4 848 704 A1**
(43) Date of publication of application: **02.12.2026**
(21) Application number: 26180965.1
(22) Date of filing: 26.05.2026
(51) Int. Cl.: H04N 1/00, G06F 21/60, G06F 21/62, H04N 1/44, G06F 21/31

(54) **IMAGE PROCESSING APPARATUS AND METHOD FOR MANAGING CLOUD SCAN JOBS WITH INTEGRATED DELETION CAPABILITY**

(30) Priority: 28.05.2025 JP 2025089214
(71) Applicant: CANON KABUSHIKI KAISHA, Ohta-ku Tokyo 146-8501 (JP)
(72) Inventor: KOBAYASHI, Hiroaki, Tokyo (JP)
(74) Representative: WESER & Kollegen Patentanwälte PartmbB

(57) **Abstract**

An image processing apparatus comprising: image obtaining means for obtaining image data; and first outputting means for outputting the obtained image data, a device token, and a cloud authentication identifier to a cloud server that provides a cloud scan service, the device token authorizing uploading of the image data to the cloud server, and the cloud authentication identifier being for confirming user authentication registration in authentication of the cloud scan service, wherein the first outputting means outputs, to the cloud server, an instruction for deleting a cloud job corresponding to the output image data, the instruction for deleting the cloud job including a cloud job identifier that identifies, in the cloud server, the cloud job corresponding to the instruction for deleting, the device token, and the cloud authentication identifier.

## Description

### TECHNICAL FIELD

The present disclosure relates to an image processing apparatus, a control method for the image processing apparatus, and a storage medium.

### BACKGROUND

In recent years, cloud scan services are becoming widespread due to the evolution of cloud technology. In light of this, there is demand for a printer driver-less system, which enables the use of print and scan functions regardless of environment, in view of the prevalence of remote work and the like. This indicates that even confidential information that is supposed to be handled in an office can be handled in various environments regardless of location, unlike a conventional environment in which files are exchanged only inside a network in which security is established. Furthermore, there are also cases where scanned data is first stored in a server, and the data is transmitted in response to a data access request from a terminal other than an image processing apparatus. For example, Japanese Patent Laid-Open No. 2017-63498 describes a technique in which access restriction information is provided when uploading data from an image processing apparatus to a server, and the data is obtained by inputting the access restriction information from another terminal to the server.

### SUMMARY

Incidentally, when using a cloud scan service, there is a possibility that a scan job is executed using an unintended scan setting, as with a case where a scan job has been executed using a single-sided setting although the scan is supposed to be executed using a double-sided setting. In such a case, it is conceivable that user authentication is required to delete data uploaded to the server. However, in a case where this user authentication cannot be executed on an image processing apparatus, the user needs to execute authentication processing on a user terminal different from the image processing apparatus. It can be stated that usability of such a cloud scan service is poor.

Furthermore, depending on the cloud scan service, it is conceivable that a cloud authentication identifier associated with a user is required when uploading scan data to a server. However, in a case where the user has input the wrong cloud authentication identifier, it is conceivable that the user cannot even access the server from a user terminal, and the data uploaded to the server cannot be referred to.

The present disclosure enables realization of a technique that can improve usability in a case where scan data that has been uploaded to a server with use of a cloud scan service is to be deleted.

The present disclosure in its first aspect provides an image processing apparatus specified in claim 1. Optional features are specified in claims 2 to 13.

The present disclosure in its second aspect provides a method for controlling an image processing apparatus as specified in claim 14.

The present disclosure in its third aspect provides a non-transitory computer-readable storage medium storing a program for causing a computer to execute each step of a control method for an image processing apparatus as specified in claim 15.

With the above configuration, it is possible to suppress a change in an output order between an image file and an associated file when outputting the image file and the associated file associated with the image file.

Features of the present disclosure will become apparent from the following description of embodiments with reference to the attached drawings. The following description of embodiments is described by way of example.

### BRIEF DESCRIPTION OF THE DRAWINGS

FIG. 1 is a diagram of an overview of an information processing system according to an embodiment.
FIG. 2 is a hardware configuration diagram of an image processing apparatus according to an embodiment.
FIG. 3 is a software configuration diagram of the image processing apparatus according to an embodiment.
FIG. 4 is a flowchart of processing according to an embodiment.
FIG. 5 is a flowchart of processing according to an embodiment.
FIGS. 6A and 6B are diagrams showing display screens according to an embodiment.
FIGS. 7Ato 7E are diagrams showing display screens according to an embodiment.
FIG. 8 is a diagram showing table information according to an embodiment.
FIG. 9 is a flowchart of processing according to an embodiment.
FIG. 10 is a flowchart of processing according to an embodiment.
FIG. 11 is a diagram showing table information according to an embodiment.
FIG. 12 is a diagram showing a display screen according to an embodiment.
FIG. 13 is a flowchart of processing according to an embodiment.
FIG. 14 is a diagram showing a display screen according to an embodiment.
FIG. 15 is a flowchart of processing according to an embodiment.
FIG. 16 is a diagram showing table information according to an embodiment.
FIGS. 17A and 17B are diagrams showing display screens according to an embodiment.

### DESCRIPTION OF THE EMBODIMENTS

Hereinafter, embodiments will be described in detail with reference to the attached drawings. Note, the following embodiments are not intended to limit the scope of the claims. Multiple features are described in the embodiments, but it is not the case that all such features are required, and multiple such features may be combined as appropriate. Furthermore, in the attached drawings, the same reference numerals are given to the same or similar configurations, and redundant description thereof is omitted.

In the present specification, a printing method may be any of an electrophotographic method, an inkjet method, a thermal transfer method, and so forth. In the present specification, "recording" (also referred to as "image formation", "printing of characters", or "printing") is not limited to the case of formation of significant information, such as characters and graphics. It is assumed that "recording" also broadly refers to a case where images, designs, patterns, and the like are formed on a recording medium, irrespective of whether they are significant or insignificant, and irrespective of whether they have been made visible so that humans can visually perceive them, or a case where the medium is processed. Also, "recording mediums (sheets)" broadly include not only recording paper used in a general image forming apparatus, but also conveyable mediums, such as a cloth, a plastic film (OHP), a metallic plate, glass, a ceramic, a wood material, and leather. Furthermore, "ink" (also referred to as "liquid") should be construed broadly, similarly to the definition of the aforementioned "recording (printing)". It is assumed that ink refers to liquid that, when applied to a recording medium, can be provided in formation of images, designs, patterns, and the like, processing of the recording medium, or processing of ink (e.g., solidification or insolubilization of a coloring agent in ink applied to the recording medium).

### (Embodiment)

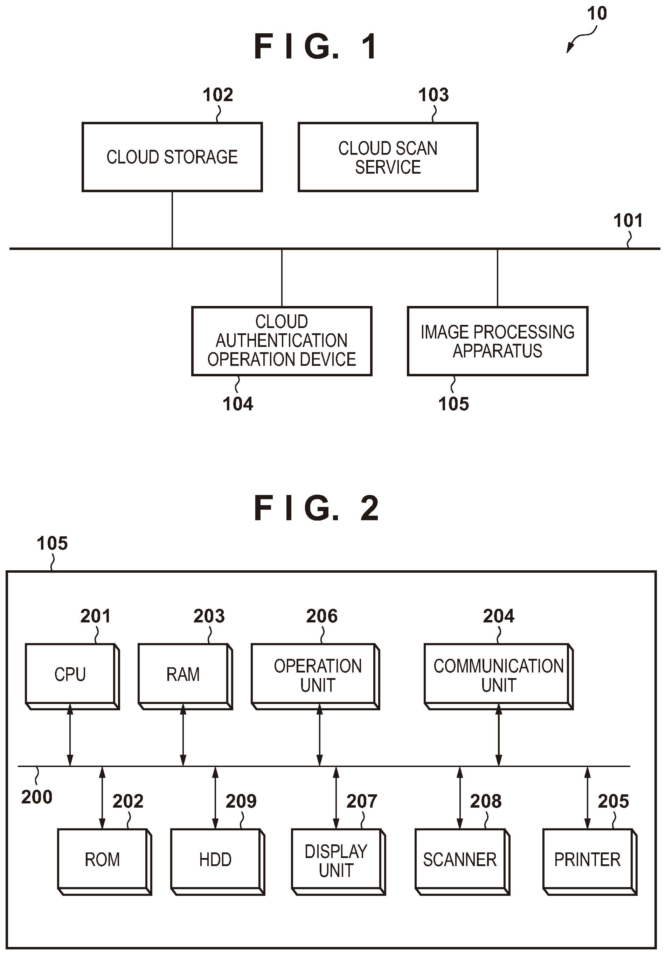

An embodiment will be described in relation to basic operations for a case where the present disclosure is applied. An overview of an information processing system 10 according to the embodiment will be described using FIG. 1. The information processing system 10 is configured to include an image processing apparatus 105, a cloud scan service 103 (an example of a "cloud server"), a cloud storage 102, and a cloud authentication operation device 104 (an example of an "information processing terminal"). Also, the respective apparatuses are connected to one another via the Internet 101.

The image processing apparatus 105 is connected to the Internet 101, and communicates with the cloud scan service 103. The cloud scan service 103 has a function of transferring image data to the cloud storage 102 and the like. Note that the cloud storage 102 is a cloud storage that is used by a user in, for example, sharing of data; one example thereof is a cloud storage provided by the Universal Print service provided by Microsoft Corporation, among others.

Functions provided by the cloud scan service 103 will now be described in detail. The cloud scan service 103 manages scan image data that has been uploaded from the image processing apparatus 105 by temporarily storing the scan image data in a device storage (not shown) inside the cloud scan service 103. Then, the cloud scan service 103 requests the user for authentication processing for a cloud account, which is necessary for the use of the cloud storage 102. At this time, the cloud scan service 103 distributes a URL for authentication to, for example, an E-mail address of the user. Then, the user performs an authentication operation via the cloud authentication operation device 104. In a case where the authentication processing of the user has succeeded, the cloud scan service 103 transfers uploaded scan image data of this user to the cloud storage 102.

Furthermore, the cloud scan service 103 also has a function of automatically deleting image data stored and managed in the device storage in a case where this image data has been left untransferred without execution of an authentication operation therefor for a long period of time (e.g., one month or the like). This automatic deletion is a setting on the cloud scan service 103 side, and can be changed arbitrarily by an administrator.

A hardware configuration of the image processing apparatus 105 will be described using FIG. 2. The image processing apparatus 105 is an apparatus that detects a document area within original image data, and is configured to include a CPU 201, a ROM 202, a RAM 203, a communication unit 204, a printer 205, an operation unit 206, a display unit 207, a scanner 208, and an HDD 209. Also, the discrete constituents are connected to one another via a system bus 200.

The CPU 201 performs overall control on the operations of each part of the image processing apparatus 105. The ROM 202 and the HDD 209 store programs and the like executed by the CPU. Also, the HDD 209 stores a cloud job history. The RAM 203 is used as a working area for deploying programs when the CPU 201 controls the apparatus. The CPU 201 can realize various types of functions that can be executed by the image processing apparatus 105 by deploying programs stored in the ROM 202 or the HDD 209 to the RAM 203.

The communication unit 204 is configured to include a communication module, such as a circuit for communication. The communication unit 204 connects another device and recording apparatus to the image processing apparatus 105, and exchanges image data among these apparatuses. The scanner 208 is an apparatus for generating image data by reading an image formed on a sheet. The printer 205 records data read by the scanner 208 on a sheet. The operation unit 206 is configured to include various types of switches and buttons, a keyboard, and the like. Using the operation unit 206, a user can input various types of commands to the image processing apparatus 105. The display unit 207 is configured to include a display, and displays various types of information for the user. Note that the operation unit 206 may include a touch panel display and be configured integrally with the display unit 207.

Also, although not illustrated, the cloud storage 102 and the cloud scan service 103 are, for example, computers. Each apparatus is configured to include, for example, a processor like a CPU, a main storage apparatus like a RAM or a ROM, an auxiliary storage apparatus like an EPROM, a hard disk drive, or a removable medium, an input apparatus, and a communication module. Note that the removable medium may be, for example, a USB memory, or a disc recording medium like a CD or a DVD. Also, the communication module includes a circuit for communication, such as a network interface card (NIC). The auxiliary storage apparatus stores an operating system (OS), various types of programs, various types of tables, and so forth. Then, each function that matches a predetermined purpose, which will be described later, can be realized by loading programs stored therein to a working area of the main storage apparatus, executing the programs, and controlling each constituent and the like through the execution of the programs.

Also, the cloud authentication operation device 104 is, for example, an electronic device owned by the user, such as a PC and a smartphone. The cloud authentication operation device 104 is configured to include, for example, a processor like a CPU, a main storage apparatus like a RAM or a ROM, an auxiliary storage apparatus like an EPROM, a hard disk drive, or a removable medium, an input apparatus, a communication module, and a display apparatus. Note that the removable medium may be, for example, a USB memory, or a disc recording medium like a CD or a DVD. Also, the communication module includes, for example, a circuit for wired communication, such as an NIC, or a circuit for wireless communication. The auxiliary storage apparatus stores an operating system (OS), various types of programs, various types of tables, and so forth. Then, each function that matches a predetermined purpose, which will be described later, can be realized by loading programs stored therein to a working area of the main storage apparatus, executing the programs, and controlling each constituent and the like through the execution of the programs.

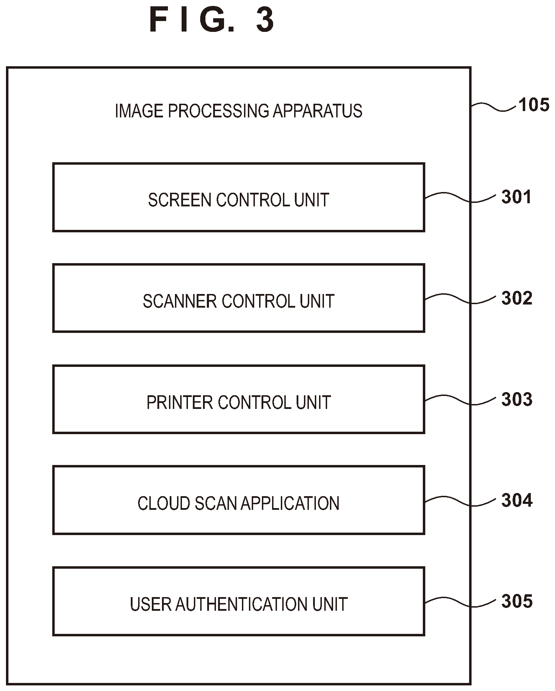

A software configuration of the image processing apparatus 105 will be described using FIG. 3. Note that each block of FIG. 3 is software stored in the ROM 202 or the HDD 209. The CPU 201 realizes processing of later-described flowcharts by reading such software to the RAM 203 and executing the same.

The image processing apparatus 105 includes a screen control unit 301, a scanner control unit 302, a printer control unit 303, a cloud scan application 304, and a user authentication unit 305. The screen control unit 301 accepts information input by the user via the operation unit 206, and generates a screen to be displayed on the display unit 207. The scanner control unit 302 reads a sheet placed on a platen and generates image data by controlling the scanner 208.

The printer control unit 303 forms image data on a sheet by controlling the printer 205. The cloud scan application 304 is an application that transmits scanned image data to the cloud scan service 103. Note that image data that has been transmitted to the cloud scan service 103 is transferred to the cloud storage 102 and the like after an authentication operation performed via the cloud authentication operation device 104. The user authentication unit 305 executes device authentication processing. For example, the screen control unit 301 displays, on the display unit 207, a device authentication screen including a user ID and a password stored in the HDD 209. Then, the screen control unit 301 accepts a user ID and a password that the user has input to the device authentication screen. Then, the user authentication unit 305 realizes device authentication by determining whether the displayed user ID and password match the input user ID and password.

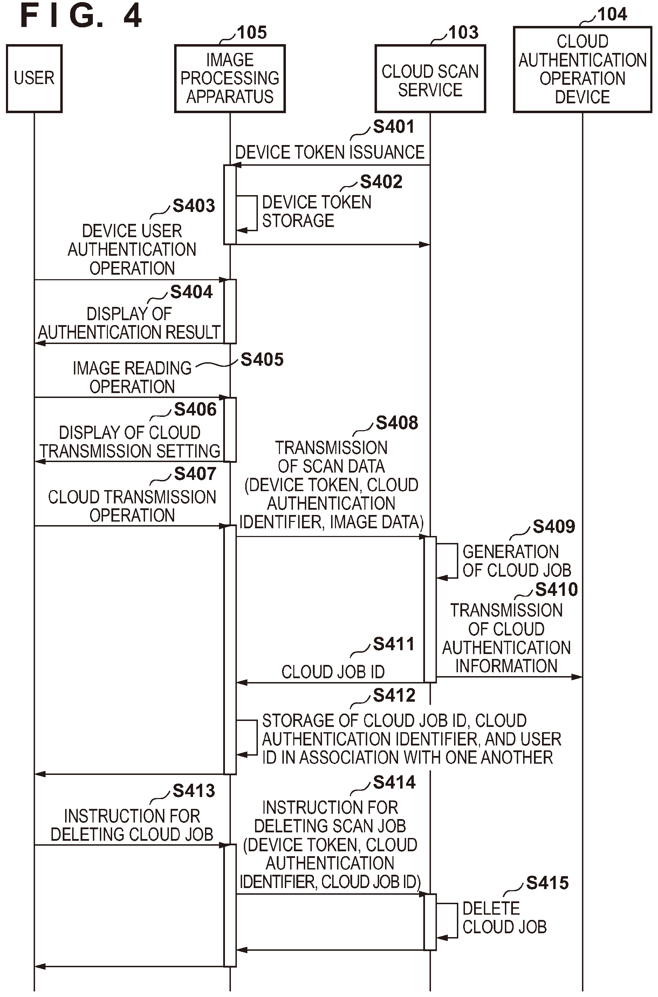

Using FIG. 4, a description is now given of a sequence flow in which image data is uploaded from the image processing apparatus 105 to the cloud scan service 103, and then the uploaded image data is deleted from the cloud scan service 103. Note that this sequence flow is realized by the CPU of each apparatus included in the information processing system 10 loading programs stored in the ROM to a working area of the RAM, executing the programs, and controlling each constituent and the like through the execution of the programs.

In step S401, the CPU 201 of the image processing apparatus 105 displays a non-illustrated web screen provided by the cloud scan service 103 on the display unit 207. This web screen includes boxes for inputting an IP address and a device identifier of the image processing apparatus 105, and a device token issuance button. Then, with use of the operation unit 206, the CPU 201 accepts an input from an administrator of the image processing apparatus 105 to these boxes displayed on this web screen.

Then, in response to acceptance of an operation of pressing the device token issuance button displayed on the web screen, the CPU 201 transmits a request for issuance of a device token to the cloud scan service 103 with use of the communication unit 204. The CPU of the cloud scan service 103 accepts this request with use of the communication module, and issues a device token to the image processing apparatus 105. Note that the device token is issued as an authorization token for a device when, for example, uploading scan data from the image processing apparatus 105 to the device storage (not shown) of the cloud scan service 103. Then, the CPU 201 of the image processing apparatus 105 receives the issued device token with use of the communication unit 204.

In step S402, the CPU 201 of the image processing apparatus 105 stores the received device token into the HDD 209. Thus far, processing is executed by a system administrator performing an operational input once with respect to the image processing apparatus 105. Thereafter, processing is executed by a user performing an operational input with respect to the image processing apparatus 105.

In step S403, the CPU 201 of the image processing apparatus 105 accepts a device authentication operation from the user with use of the operation unit 206. This operation is, for example, the user's input of a user ID and a password with use of the operation unit 206. Then, the CPU 201 determines whether authentication is successful with use of the user authentication unit 305.

In step S404, the CPU 201 displays a user authentication result with use of the display unit 207. Here, a flow of a case where the user authentication has succeeded is exemplarily shown. In a case where the device authentication has succeeded, the CPU 201 further displays, for example, an operation screen for a scan operation with use of the display unit 207. In step S405, the CPU 201 accepts an operation of scanning image data to be transmitted to the cloud scan service 103 with use of the operation unit 206. Then, the CPU 201 (an example of an "image obtainment unit" and a "reading unit") obtains image data by scanning an image formed on a sheet with use of the scanner 208.

In step S406, the CPU 201 displays a setting screen for setting cloud transmission with use of the display unit 207. Here, in step S405, the CPU 201 may scan the next data continuously after executing a scan corresponding to one sheet, or may transmit scanned data to the cloud scan service 103 each time a scan has been executed. In view of this, in step S406, the CPU 201 also displays the setting screen for cloud transmission in addition to the operation screen for the scan operation displayed in step S405.

In step S407, after the user has completed a scan for data corresponding to a predetermined number of sheets, the user performs an operation of transmitting scan data to the cloud scan service 103 with use of the operation unit 206. Then, the CPU 201 accepts this operation. In step S408, the CPU 201 (an example of a "first output unit") transmits (an example of "output") the following pieces of data to the cloud scan service 103 with use of the communication unit 204. The transmitted pieces of data are the device token stored in step S402, a cloud authentication identifier used in authentication at the time of transfer to the cloud storage 102 (hereinafter also referred to as a cloud authentication ID), and image data scanned in step S405. Then, the CPU (an example of a "second obtainment unit") of the cloud scan service 103 receives these pieces of data with use of the communication module.

Here, the cloud authentication identifier is information that is input by the user with use of the operation unit 206 of the image processing apparatus 105. The cloud authentication identifier is an identifier for confirming user authentication registration in authentication of the cloud scan service. The cloud authentication identifier is information that is used to specify a destination to which an authentication screen and the like are to be transmitted when the cloud scan service 103 makes an authentication request to a user thereof. For example, an Internet-style login name of the user, which is an attribute based on the Internet standard RFC 822 and called a UserPrincipalName (UPN), can be used as the cloud authentication identifier. Other than this, another identifier for user identification supported by the cloud scan service 103 can also be adopted as the cloud authentication identifier.

Once the pieces of data, such as image data, have been received from the image processing apparatus 105 in step S408, the CPU (an example of a "generation unit") of the cloud scan service 103 associates the cloud authentication identifier and the device token with each other and generates a cloud job in step S409. Also, the CPU of the cloud scan service 103 stores and manages the received image data and cloud job in the device storage (not shown).

In step S410, the CPU (an example of a "specification unit") of the cloud scan service 103 specifies a destination to which authentication information should be transmitted (the cloud authentication operation device 104) with use of the cloud authentication identifier received from the image processing apparatus 105 in step S408. Then, the CPU of the cloud scan service 103 transmits cloud authentication information to the specified cloud authentication operation device 104 with use of the communication module.

The CPU of the cloud authentication operation device 104 receives this cloud authentication information with use of the communication module. The CPU of the cloud authentication operation device 104 transmits an E-mail and a message related to authentication processing with use of the communication module. That is to say, the CPU of the cloud authentication operation device 104 displays information related to authentication processing for a cloud account with use of a display apparatus. Then, the CPU accepts an input operation related to the authentication processing for the cloud account with use of an input apparatus. Then, the CPU executes the authentication processing for the cloud account with use of the input information. Then, once the authentication for the cloud account has succeeded, the CPU of the cloud authentication operation device 104 transmits information indicating that the authentication for the cloud account has succeeded to the cloud scan service 103 with use of the communication module.

The CPU of the cloud scan service 103 receives information indicating that the authentication for the cloud account has succeeded with use of the communication module. Then, the CPU of the cloud scan service 103 transmits the image data in a state where it has been received and stored into the device storage in step S408 to the cloud storage 102 with use of the communication module. The CPU of the cloud storage 102 receives this image data with use of the communication module, and stores this image data into the auxiliary storage apparatus or the like.

Also, the CPU of the cloud scan service 103 deletes this image data in a state where it is stored in the device storage, and a corresponding cloud job. Note that there are cases where later-described step S415 is executed before processing for transferring such image data to the cloud storage 102, and processing for deleting the transferred image data and the cloud job from the cloud scan service 103.

In step S411, the CPU (an example of a "second output unit") of the cloud scan service 103 transmits a cloud job identifier for uniquely specifying the cloud job to the image processing apparatus 105 with use of the communication module. Note that the cloud job identifier is hereinafter also referred to as a cloud job ID. Then, the CPU 201 (an example of a "first obtainment unit") of the image processing apparatus 105 receives this cloud job ID with use of the communication unit 204.

In step S412, the CPU 201 of the image processing apparatus 105 associates the cloud job ID received in step S411, the cloud authentication identifier transmitted to the cloud scan service 103 in step S408, and the user ID used in the device user authentication in step S403 with one another. Then, the CPU 201 (an example of a "storage control unit") stores these pieces of associated data into the HDD 209.

In step S413, the CPU 201 displays a list of cloud job transmission histories corresponding to the image data transmission to the cloud scan service 103 with use of the display unit 207 (the details will be described later). Then, the CPU 201 accepts a user's designation of any cloud job transmission history, and further accepts an input for designating deletion of a designated cloud job, with use of the operation unit 206.

In step S414, the CPU 201 issues an instruction for deleting the accepted cloud job to the cloud scan service 103 with use of the communication unit 204. At this time, a cloud job ID of the job for which the deletion instruction has been issued in step S413, a cloud authentication identifier associated with the cloud job ID, and the device token are transmitted together. Then, the cloud scan service 103 receives these pieces of information with use of the communication module.

In step S415, the cloud scan service 103 deletes a cloud job corresponding to the designated cloud job ID from the device storage into which the cloud job was stored in step S409. Note that there are cases where the cloud authentication operation device 104 has authenticated the cloud account at the time of execution of step S415. Also, there are cases where the image data stored in the device storage of the cloud scan service 103 has already been transferred to the cloud storage 102. In these cases, the cloud job is in a state where it has already been deleted. In view of this, the CPU of the cloud scan service 103 may determine whether the cloud job is in a state where it is stored in the device storage, and execute processing for deleting the cloud job in a case where it has been determined that the cloud job is in the stored state. Then, processing is ended.

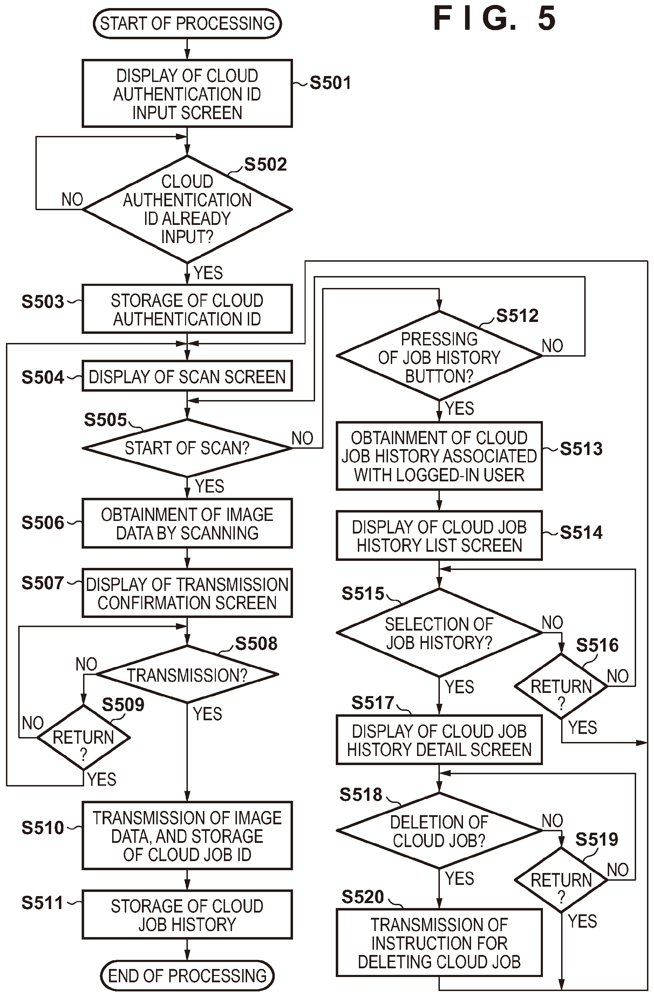

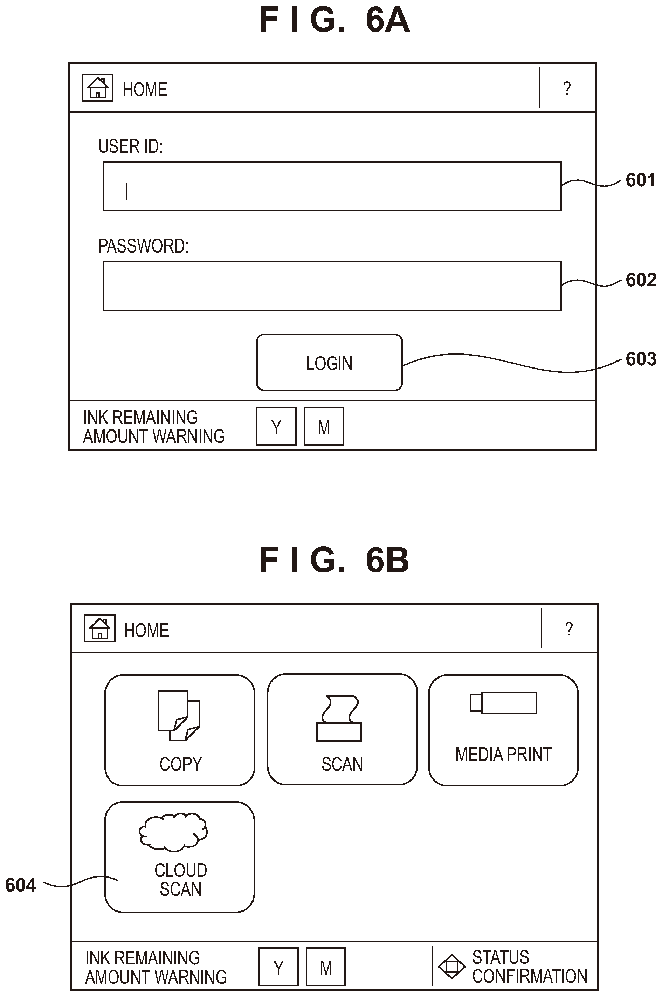

Processing related to a cloud scan executed on the image processing apparatus 105 will be described using FIG. 5. Note that before the execution of processing of a flowchart of FIG. 5, a user who has been authenticated using a user authentication screen (FIG. 6A) displayed on the display unit 207 of the image processing apparatus 105 presses a cloud scan application button 604 on a menu screen (FIG. 6B). In this way, an instruction for calling up the cloud scan application 304 is issued. Consequently, the cloud scan application 304 is activated. The flowchart of FIG. 5 is started in response to such an activation of the cloud scan application 304.

The details of the user authentication screen (an example of an "authentication screen") and the menu screen will be described using FIGS. 6A and 6B. The user authentication screen shown in FIG. 6A includes a user ID input field 601, a password input field 602, and a login button 603. The user ID input field 601 is a component intended for the user to input his/her own user ID. The CPU 201 of the image processing apparatus 105 displays such a user authentication screen with use of the screen control unit 301. Then, when the CPU 201 has accepted an operation of pressing the user ID input field 601, the screen control unit 301 displays a non-illustrated software keyboard, thereby enabling character strings to be input.

The password input field 602 is a component for inputting a user ID and a password. The login button 603 is a button for performing user authentication. Once the CPU 201 has accepted an operation of pressing the login button 603, the user authentication unit 305 executes user authentication processing with use of character strings input to the user ID input field 601 and the password input field 602.

Also, the menu screen shown in FIG. 6B includes the cloud scan application button 604 for activating the cloud scan application 304. The CPU 201 displays such a menu screen with use of the screen control unit 301 in a case where user authentication has succeeded. When the user has performed an operation of pressing the cloud scan application button 604 on the menu screen, the CPU 201 accepts this pressing operation and activates the cloud scan application 304. Then, the CPU 201 starts processing of the flowchart of FIG. 5.

A description of the flowchart of FIG. 5 is now started. Note that the flowchart of FIG. 5 is realized by the CPU 201 of the image processing apparatus 105 reading out programs for realizing each software module, which are stored in the ROM 202 or the HDD 209, to the RAM 203, and executing the programs. Also, in the present flowchart, it is assumed that a device token is already stored in the HDD 209 of the image processing apparatus 105 as in step S402 of FIG. 4.

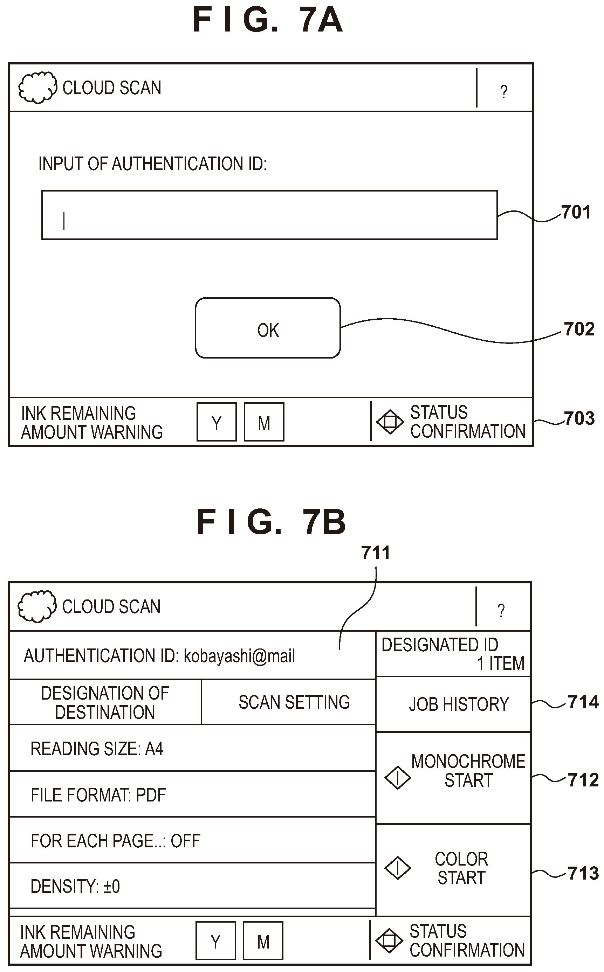

In step S501, the cloud scan application 304 displays a cloud authentication ID input screen on the display unit 207 with use of the screen control unit 301. The cloud authentication ID input screen (an example of a fifth screen) will be described using FIG. 7A. The cloud authentication ID input screen includes a cloud authentication ID input field 701 (an example of a "fifth object"), an OK button 702, and a status confirmation button 703 (an example of a "sixth object").

The cloud authentication ID input field 701 is a component intended for a user to input his/her own cloud authentication ID. Upon accepting an operation of pressing the cloud authentication ID input field 701, the cloud scan application 304 displays a non-illustrated software keyboard. This enables the user to input a character string.

Also, upon accepting an operation of pressing the OK button 702, the cloud scan application 304 (an example of an "acceptance unit") obtains information input to the cloud authentication ID input field 701 as a cloud authentication ID. The cloud scan application 304 proceeds with subsequent processing with use of this obtained cloud authentication ID.

Also, upon accepting an operation of pressing the status confirmation button 703, the cloud scan application 304 displays a history of E-mail transmissions through the execution of scans, and a history of jobs in which image data has been transmitted to a file server through the execution of scans. This enables the user to refer to a job history (the details will be described later).

In step S502, the cloud scan application 304 accepts an operation of pressing the OK button 702. Then, the cloud scan application 304 determines whether information has already been input to the cloud authentication ID input field 701. Then, in a case where the cloud scan application 304 has determined that information has already been input to the cloud authentication ID input field 701, processing proceeds to step S503; otherwise, processing proceeds to the beginning of step S502.

In step S503, the cloud scan application 304 stores a character string input to the cloud authentication ID input field 701 as a cloud authentication ID into the RAM 203. In step S504, the cloud scan application 304 displays a scan screen on the display unit 207 with use of the screen control unit 301.

FIG. 7B exemplarily shows the scan screen (an example of a "first screen"). The scan screen includes a cloud authentication ID display area 711, a monochrome start button 712 (an example of a "first object"), a color start button 713 (an example of the "first object"), and a job history button 714 (an example of a "second object").

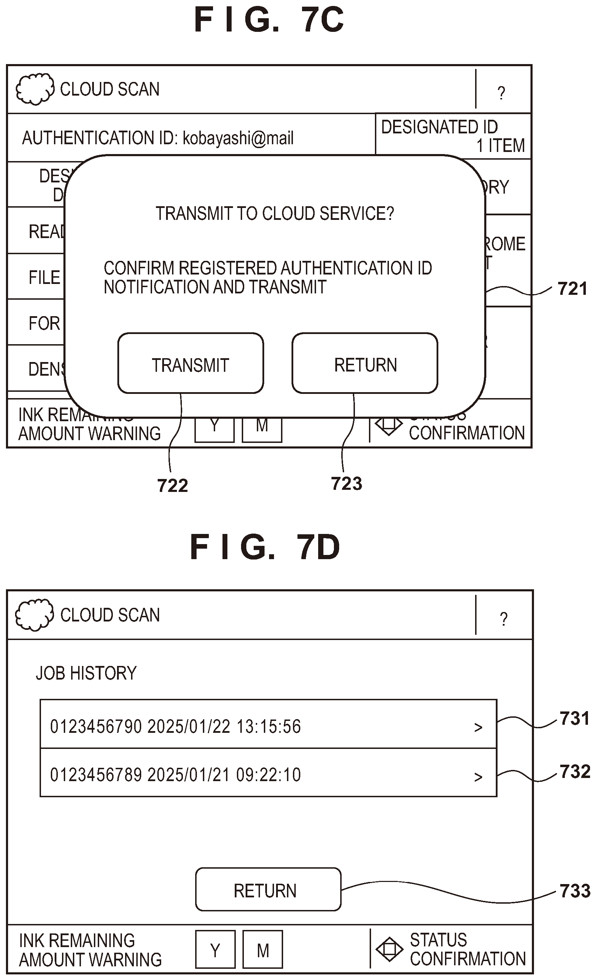

The cloud authentication ID display area 711 is an area for displaying the cloud authentication ID that has been stored by the cloud scan application 304 in step S503. The monochrome start button 712 is a button for starting a monochrome scan. The color start button 713 is a button for starting a color scan. The job history button 714 is a button for causing the screen to transition to a job history screen shown in FIG. 7D.

In step S505, the cloud scan application 304 determines whether the user has issued an instruction for starting a scan. That is to say, the cloud scan application 304 determines whether an operation of pressing the monochrome start button 712 or the color start button 713 has been performed. Then, in a case where the cloud scan application 304 (an example of an "acceptance unit") has determined that an instruction for starting a scan has been issued, processing proceeds to step S506; otherwise, processing proceeds to step S512.

In step S506, the cloud scan application 304 causes the scanner 208 to start a scan with use of the scanner control unit 302. Then, the cloud scan application 304 stores obtained image data into the RAM 203. In step S507, the cloud scan application 304 displays a transmission confirmation screen (an example of a "second screen") on the display unit 207 with use of the screen control unit 301.

FIG. 7C exemplarily shows the transmission confirmation screen. The transmission confirmation screen is a screen obtained by displaying a transmission confirmation pop-up 721 in such a manner that it is superimposed on the scan screen shown in FIG. 7B. The transmission confirmation pop-up 721 includes a message prompting confirmation of the cloud authentication ID. Also, the transmission confirmation pop-up 721 includes a transmission button 722 and a return button 723. The transmission button 722 is a button for starting transmission of the image data that has been stored into the RAM 203 in step S506 to the cloud scan service 103. The return button 723 is a button for causing the screen to return to the scan screen shown in FIG. 7B.

In step S508, the cloud scan application 304 determines whether the transmission button 722 has been pressed on the transmission confirmation screen shown in FIG. 7C. Then, in a case where the cloud scan application 304 has determined that the transmission button 722 has been pressed, processing proceeds to step S510; otherwise, processing proceeds to step S509.

In step S509, the cloud scan application 304 determines whether the return button 723 has been pressed on the transmission confirmation screen shown in FIG. 7C. Then, in a case where the cloud scan application 304 has determined that the return button 723 has been pressed, processing returns to step S504; otherwise, processing returns to step S508.

In step S510, the cloud scan application 304 transmits the image data that has been stored into the RAM 203 in step S506 to the cloud scan service 103 with use of the communication unit 204. At this time, the cloud scan application 304 also transmits the device token in a state where it is stored in the HDD 209, and the cloud authentication ID that has been stored into the RAM 203 in step S503, together. Once the cloud scan application 304 has transmitted the image data, it obtains a cloud job ID as a response from the cloud scan service 103. Then, the cloud scan application 304 stores the obtained cloud job ID into the RAM 203.

In step S511, the cloud scan application 304 associates the cloud job ID stored in step S510 and the cloud authentication ID stored in step S503 with each other. Furthermore, the cloud scan application 304 also associates a user ID for device authentication that was used by the user (hereinafter also referred to as a device authentication ID) with these pieces of information. The user ID is an ID that has been input on the user authentication screen shown in FIG. 6A before the execution of the flowchart of FIG. 5. Also, the cloud scan application 304 associates a transmission date and time of the image data with these pieces of information, and stores them into a cloud job history table in the HDD 209. Then, processing is ended.

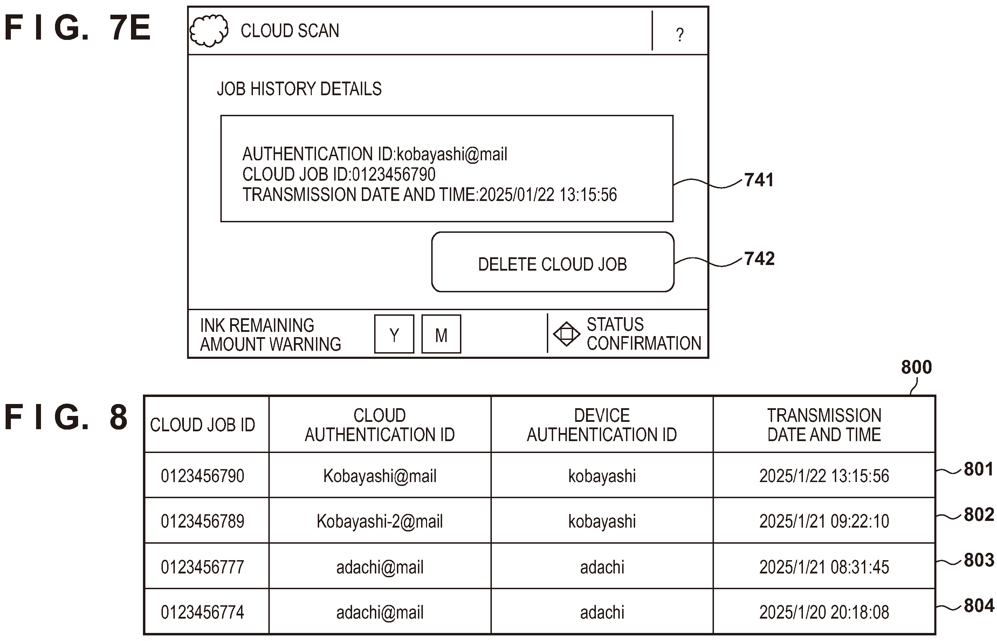

FIG. 8 exemplarily shows a cloud job history table 800. The cloud job history table 800 includes, for example, records 801 to 804. A device authentication ID field in the record 801 indicates that a user has performed device authentication by inputting kobayashi as the device authentication ID on the user authentication screen (FIG. 6A). Other fields of the record 801 exemplarily show history information indicating that this user has performed a cloud scan by inputting kobayashi@mail as the cloud authentication ID on the cloud authentication ID input screen (FIG. 7A).

Similarly to the record 801, the record 802 exemplarily shows history information indicating that the user who has undergone device authentication as kobayashi on the user authentication screen, and who has undergone cloud authentication by inputting kobayashi-2@mail on the cloud authentication ID input screen, has performed a cloud scan. In this way, the user can use different cloud authentication IDs separately while using the same device authentication ID.

The records 803 and 804 exemplarily show history information indicating that a user has performed device authentication and performed a cloud scan by inputting adachi as the device authentication ID on the user authentication screen. Also, the records 803 and 804 exemplarily indicate that this user has performed cloud authentication by inputting adachi@mail as the cloud authentication ID on the cloud authentication ID input screen.

The foregoing is processing for transmitting image data to the cloud scan service 103 in the flowchart of FIG. 5. In the following description, processing of a case where the user has issued an instruction for deleting a cloud job with reference to a cloud job history in the flowchart of FIG. 5 will be described.

In step S512, the cloud scan application 304 determines whether the job history button 714 has been pressed on the scan screen shown in FIG. 7B. Then, in a case where the cloud scan application 304 (an example of an "acceptance unit") has determined that the job history button 714 has been pressed, processing proceeds to step S513; otherwise, processing returns to step S505.

In step S513, the cloud scan application 304 obtains cloud job history information corresponding to a device authentication ID of a user in a logged-in state in the cloud job history table 800 shown in FIG. 8, and stores the cloud job history information into the RAM 203. In step S514, the cloud scan application 304 displays a cloud job history list screen (an example of a "third screen"), which includes the cloud job history information stored into the RAM 203 in step S513, on the display unit 207 with use of the screen control unit 301.

FIG. 7D exemplarily shows a cloud job history list screen. Note that FIG. 7D exemplarily shows a cloud job history screen of a user in a state where he/she has performed device authentication as kobayashi. Therefore, the cloud job history screen displays contents of the pieces of cloud job history information 801 and 802 in FIG. 8.

The cloud job history screen includes cloud job history buttons 731 and 732 (an example of a "third object") and a return button 733. The cloud job history buttons 731 and 732 display cloud job IDs and transmission dates and times of the pieces of cloud job history information 801 and 802, respectively. The cloud job history buttons 731 and 732 are buttons for causing the screen to transition to cloud job history detail screens (FIG. 7E) corresponding to the respective buttons. Also, the return button 733 is a button for causing the screen to return to the scan screen shown in FIG. 7B. Note that a cloud job history detail screen will be described later.

In step S515, the cloud scan application 304 determines whether one of the cloud job history buttons 731 and 732 has been selected on the cloud job history screen shown in FIG. 7D. Then, in a case where the cloud scan application 304 (an example of an "acceptance unit") has determined that one of the cloud job history buttons 731 and 732 has been selected, processing proceeds to step S517; otherwise, processing proceeds to step S516.

In step S516, the cloud scan application 304 determines whether the return button 733 has been pressed on the cloud job history screen shown in FIG. 7D. Then, in a case where the cloud scan application 304 has determined that the return button 733 has been pressed, processing returns to step S504; otherwise, processing returns to step S515.

In step S517, the cloud scan application 304 displays the cloud job history detail screen (an example of a "fourth screen") on the display unit 207 with use of the screen control unit 301. FIG. 7E exemplarily shows the cloud job history detail screen. The cloud job history detail screen includes a cloud job detail display area 741 and a cloud job deletion button 742 (an example of a "fourth object"). The cloud job detail display area 741 is an area for displaying cloud job history information corresponding to one of the cloud job history buttons 731 and 732 that has been pressed on the cloud job history screen shown in FIG. 7D. In the example of FIG. 7E, a cloud authentication ID, a cloud job ID, and a transmission date and time are displayed in this area. The cloud job deletion button 742 is a button for issuing an instruction for deleting a cloud job corresponding to a cloud job ID in a state where it is displayed on the cloud job detail display area 741.

In step S518, the cloud scan application 304 determines whether the cloud job deletion button 742 has been pressed on the cloud job history detail screen shown in FIG. 7E. Then, in a case where the cloud scan application 304 has determined that the cloud job deletion button 742 has been pressed, processing proceeds to step S520; otherwise, processing proceeds to step S519.

In step S519, the cloud scan application 304 determines whether a return button (not shown) has been pressed on the cloud job history detail screen shown in FIG. 7E. In a case where the cloud scan application 304 has determined that the return button has been pressed, processing returns to step S504; otherwise, processing returns to step S518.

In step S520, the cloud scan application 304 issues an instruction for deleting the cloud job corresponding to the determination of step S518 to the cloud scan service 103 with use of the communication unit 204. At this time, the cloud scan application 304 uses the cloud job ID that was displayed in the cloud job detail display area 741 on the cloud job history detail screen in step S518. Also, the cloud scan application 304 transmits the device token in a state where it has been stored in the HDD 209, and the cloud authentication ID that has been stored in the RAM 203 in step S503, to the cloud scan service 103 together. Then, processing returns to step S504.

Although the above description has been provided in relation to an example in which a cloud job history is displayed on the cloud job history screen shown in FIG. 7D, a cloud job history is not limited to being displayed on this screen. For example, in a case where an operation of pressing the status confirmation button 703 shown in FIG. 7A has been performed, a cloud job history may be displayed together with a history of Email transmissions through the execution of scans, and a history of jobs in which image data has been transmitted to a file server through the execution of scans.

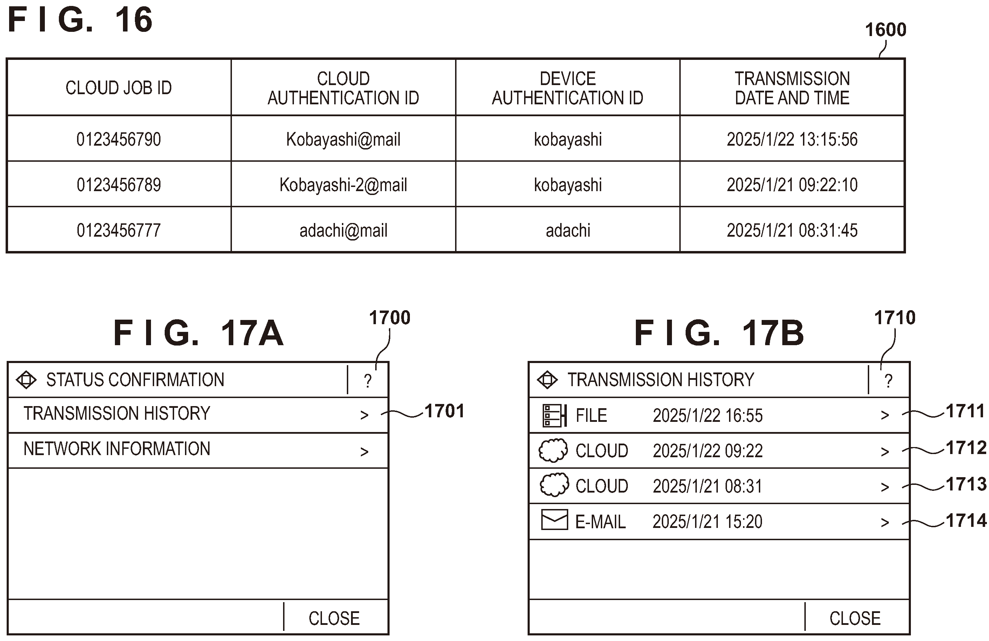

FIG. 17A exemplarily shows a status confirmation screen 1700 (an example of a "sixth screen") displayed by the cloud scan application 304 in a case where such an operation of pressing the status confirmation button 703 has been performed. The status confirmation screen 1700 is a screen for referring to, for example, a transmission history and network information of the image processing apparatus 105. The status confirmation screen 1700 includes a transmission history button 1701 (an example of a "seventh object").

Upon accepting an operation of pressing the transmission history button 1701, the cloud scan application 304 (an example of an "acceptance unit") causes the screen to transition to a transmission history screen 1710 (an example of a "seventh screen"). FIG. 17B exemplarily shows the transmission history screen 1710. The transmission history screen 1710 displays not only cloud job histories related to cloud jobs executed by the cloud scan application 304, but also job histories other than the cloud jobs executed by the cloud scan application 304.

More specifically, FIG. 17B exemplarily shows a transmission history screen 1710 of a case where device authentication has been undergone under kobayashi. The transmission history screen 1710 includes a transmission history 1711 (an example of a "ninth object") of transmissions to a file server that have been executed by the cloud scan application 304. Also, the transmission history screen 1710 includes cloud job histories 1712 and 1713 (examples of an "eighth object) of cloud jobs executed by kobayashi. Furthermore, the transmission history screen 1710 includes an Email transmission history 1714 (an example of a "ninth object") of E-mail transmissions executed by the cloud scan application 304. Note that the cloud job histories 1712 and 1713 are data obtained from the cloud job history table 800. Also in a case where the cloud scan application 304 has accepted an operation of pressing one of buttons corresponding to these cloud job histories 1712 and 1713, it can display the cloud job history detail screen of FIG. 7E including the cloud job history of the operated button.

### <One Aspect of Mechanisms and Advantageous Effects>

In the information processing system 10 according to the embodiment, scanned image data is transmitted from the image processing apparatus 105 to the cloud scan service 103. Then, the cloud scan service 103 generates a cloud job corresponding to this image data. Then, the cloud scan service 103 transmits a cloud job ID that identifies the cloud job to the image processing apparatus 105. At this time, the image processing apparatus 105 associates information of a cloud job ID and the like necessary for deletion of the image data with the image data, and stores the information as cloud job history information into the HDD 209. In this way, an instruction for deleting the cloud job can be issued from the image processing apparatus 105 without using the cloud authentication operation device 104, and usability can be improved.

Furthermore, in the information processing system 10 according to the embodiment, cloud job IDs that are respectively associated with a plurality of device authentication IDs are stored in the HDD 209. However, the cloud job history buttons 731 and 732 shown in FIG. 7D display cloud job IDs associated with device IDs in a state where they have been device-authenticated. In other words, deletion of a cloud job associated with a device ID in a state where it has not been device-authenticated is prevented. Therefore, a user who is currently logged in a device is prevented from deleting a cloud job of another user.

### (First Modification Example)

The above embodiment has been described in relation to exemplary operations of the information processing system 10 for a case where device authentication is performed on the image processing apparatus 105. However, device authentication may not be performed on the image processing apparatus 105. A first modification example exemplarily presents operations of the information processing system 10 for a case where device authentication is not executed. Note that the following mainly describes the differences between the embodiment and the first modification example.

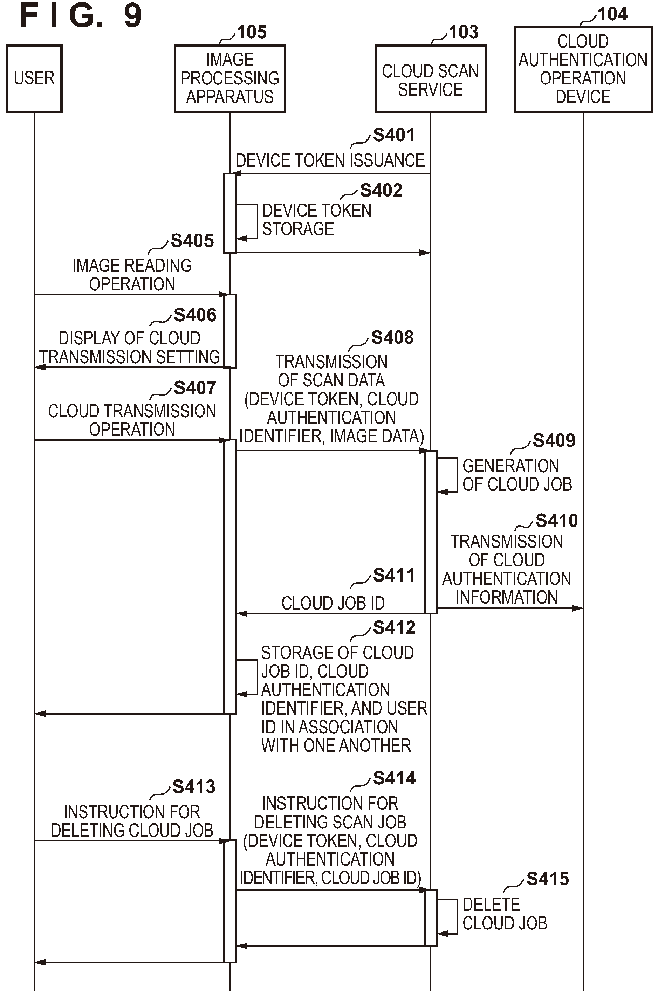

Using FIG. 9, a description is now given of a sequence flow in which image data is uploaded from the image processing apparatus 105 according to the first modification example to the cloud scan service 103, and then the uploaded image data is deleted from the cloud scan service 103. Note that this sequence flow is realized by the CPU of each apparatus included in the information processing system 10 loading programs stored in the ROM to a working area of the RAM, executing the programs, and controlling each constituent and the like through the execution of the programs.

As steps S401 and S402 according to the first modification example are similar to steps S401 and S402 according to FIG. 4 of the embodiment, a description thereof is omitted. Note that after step S402 according to the first modification example has been executed, processing proceeds to step S405. That is to say, the device user authentication operation of step S403 and the display of the authentication result in step S404 according to the embodiment are not executed. As steps S405 to S415 according to the first modification example are similar to steps S405 to S415 according to the embodiment, a description thereof is omitted. Then, processing is ended.

As a result, a user no longer needs to input a device authentication ID to the image processing apparatus 105. Also, the user authentication screen shown in FIG. 6A is not displayed. Therefore, at the time of activation of the image processing apparatus 105, the menu screen shown in FIG. 6B is displayed. Then, when the user has performed an operation of pressing the cloud scan application button 604 on the menu screen, the CPU 201 accepts this pressing operation and activates the cloud scan application 304. Then, the CPU 201 starts processing of the flowchart of FIG. 9.

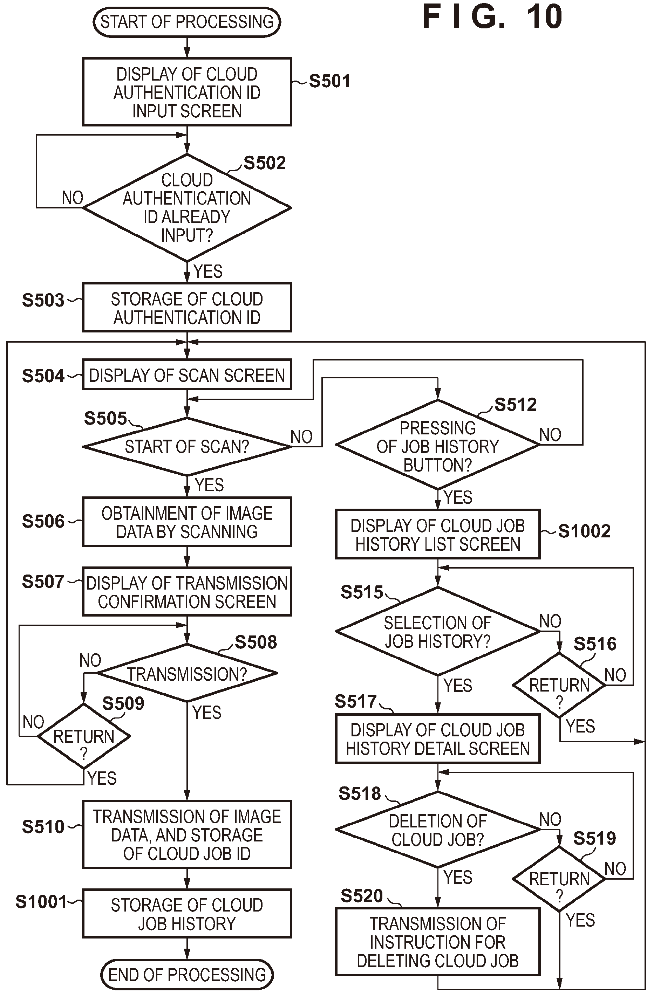

Processing related to a cloud scan executed on the image processing apparatus 105 according to the first modification example will be described using FIG. 10. Note that the flowchart of FIG. 10 is realized by the CPU 201 of the image processing apparatus 105 reading out programs for realizing each software module, which are stored in the ROM 202 or the HDD 209, to the RAM 203, and executing the programs.

As steps S501 to S510 according to the first modification example are similar to steps S501 to S510 according to the embodiment shown in FIG. 5, a description thereof is omitted. Note that after step S510 according to the first modification example has been executed, processing proceeds to step S1001.

In step S1001, the cloud scan application 304 associates the cloud job ID stored in step S510, the cloud authentication ID stored in step S503, and a transmission date and time of the image data with one another, and stores them into a cloud job history table in the HDD 209. Then, processing is ended.

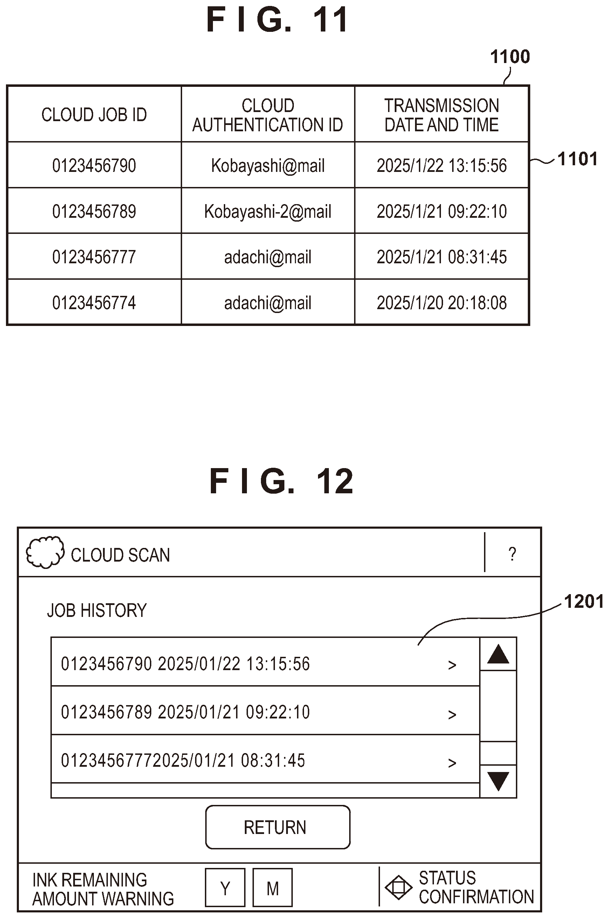

FIG. 11 exemplarily shows a cloud job history table 1100 according to the first modification example. The cloud job history table 1100 includes, for example, a record 1101. A cloud authentication ID field in the record 1101 exemplarily indicates that a user has input kobayashi@mail as a cloud authentication ID to the cloud authentication ID input screen (FIG. 7A), and performed a cloud scan. However, unlike the cloud job history table 800 according to the embodiment, the cloud job history table 1100 does not include a device authentication ID column.

The description of FIG. 10 now resumes. As step S512 according to the first modification example is similar to step S512 according to the embodiment, a description thereof is omitted. Note that in a case where the cloud scan application 304 has determined that the job history button 714 shown in FIG. 7B has been pressed in step S512 according to the first modification example, processing proceeds to step S1002; otherwise, processing returns to step S505.

In step S1002, using the screen control unit 301, the cloud scan application 304 displays a cloud job history list screen (FIG. 12) on the display unit 207 with use of cloud job history table information that has been stored into the HDD 209 in step S1001. Then, processing proceeds to step S515. As steps S515 to S520 are similar to steps S515 to S520 according to the embodiment, a description thereof is omitted.

FIG. 12 exemplarily shows a cloud job history list screen according to the first modification example. The cloud job history list screen shown in FIG. 12 includes a cloud job history button 1201. The cloud job history button 1201 displays, for example, a cloud job ID and a transmission date and time at which scanned image data was transmitted to the cloud scan service 103. Also, the cloud job history list screen displays every piece of history information in the cloud job history table 1100 shown in FIG. 11.

### <One Aspect of Mechanisms and Advantageous Effects>

In the information processing system 10 according to the first modification example, advantageous effects similar to those of the information processing system 10 according to the embodiment can be achieved even in a case where device authentication is not performed.

### (Second Modification Example)

The above has described an embodiment in which an instruction for deleting a cloud job can be issued with respect to a cloud job in any state. However, in practice, it is considered that a cloud job related to image data that has been transferred to the cloud storage 102 and the like after an authentication operation has been undergone via the cloud authentication operation device 104 is not stored in the cloud scan service 103. In this case, an instruction for deleting the cloud job is pointless. In view of this, in a second modification example, a state of a cloud job is obtained before issuing an instruction for deleting the cloud job. Also, a description is given of exemplarily operations of the information processing system 10 that can issue an instruction for deleting the cloud job in a case where the image data has not been transferred to the cloud storage 102 and the like. Note that the following mainly describes the differences between the embodiment and the second modification example.

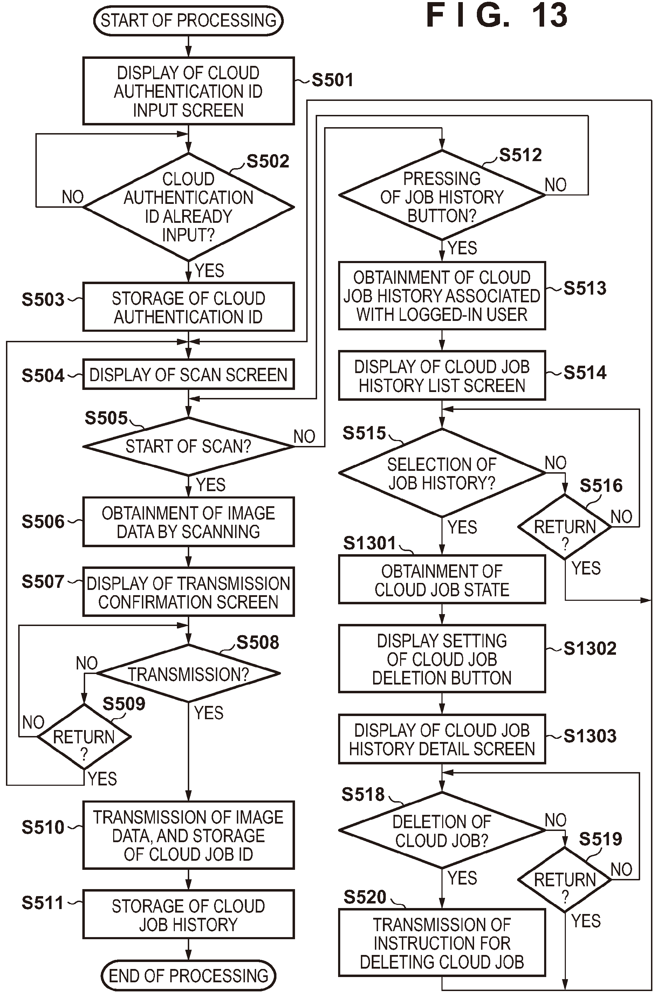

Using FIG. 13, a description is now given of a sequence flow in which image data is uploaded from the image processing apparatus 105 according to the second modification example to the cloud scan service 103, and then the uploaded image data is deleted from the cloud scan service 103. Note that this sequence flow is realized by the CPU of each apparatus included in the information processing system 10 loading programs stored in the ROM to a working area of the RAM, executing the programs, and controlling each constituent and the like through the execution of the programs.

As steps S501 to S515 according to the second modification example are similar to steps S501 to S515 according to the embodiment, a description thereof is omitted. Note that in a case where the cloud scan application 304 has determined that one of the cloud job history buttons 731 and 732 shown in FIG. 7D has been selected in step S515 according to the second modification example, processing proceeds to step S1301; otherwise, processing proceeds to step S516.

In step S1301, with use of the communication unit 204, the cloud scan application 304 makes a request for obtainment of a state of the cloud job selected in step S515 to the cloud scan service 103. At this time, the cloud scan application 304 also transmits the device token in a state where it is stored in the HDD 209, and the cloud authentication ID that has been stored into the RAM 203 in step S503, together.

The cloud scan service 103 receives this request from the image processing apparatus 105. Then, the CPU of the cloud scan service 103 reads out the state of the cloud job from the device storage, and transmits the state to the image processing apparatus 105. Then, the cloud scan application 304 of the image processing apparatus 105 receives this state of the cloud job from the cloud scan service 103, and stores the state into the RAM 203.

Note that examples of the state of the cloud job include such states as pre-transfer, transferred, ended due to an error, cancelled, and deleted. The pre-transfer state indicates a state in which the cloud job has been generated and which is before an authentication operation is performed via the cloud authentication operation device 104. In this case, the image data has not been transferred to the cloud storage 102 yet.

The transferred state indicates a state after the authentication operation has been undergone via the cloud authentication operation device 104. In this case, the image data has already been transferred to the cloud storage 102. The ended state due to an error indicates a state where processing related to the cloud job has been ended because an error has occurred in the midst of the processing for some reason. The cancelled state indicates a state where a user has cancelled the cloud job, rather than issuing an instruction for transferring the image data, at the time of the authentication operation performed via the cloud authentication operation device 104.

The deleted state indicates a state where the cloud job has been deleted from the device storage of the cloud scan service 103 because a pre-set cloud job storage period has expired in the cloud scan service 103. Alternatively, the deleted state indicates a state where the cloud job has been deleted as a result of receiving a deletion request from the image processing apparatus 105.

In step S1302, the cloud scan application 304 sets display of a cloud job deletion button 1402 (the details will be described later) in accordance with the state of the cloud job. Specifically, in a case where the job state that has been stored into the RAM 203 in step S1301 is other than the pre-transfer state, the cloud scan application 304 displays the cloud job deletion button 1402 in a grayed-out style on the display unit 207. Note that the grayed-out display of the cloud job deletion button 1402 is an example of "display whether the fourth object is selectable in an identifiable manner in accordance with the state of the cloud job". Then, the cloud scan application 304 refrains from accepting an operation of pressing the cloud job deletion button 1402.

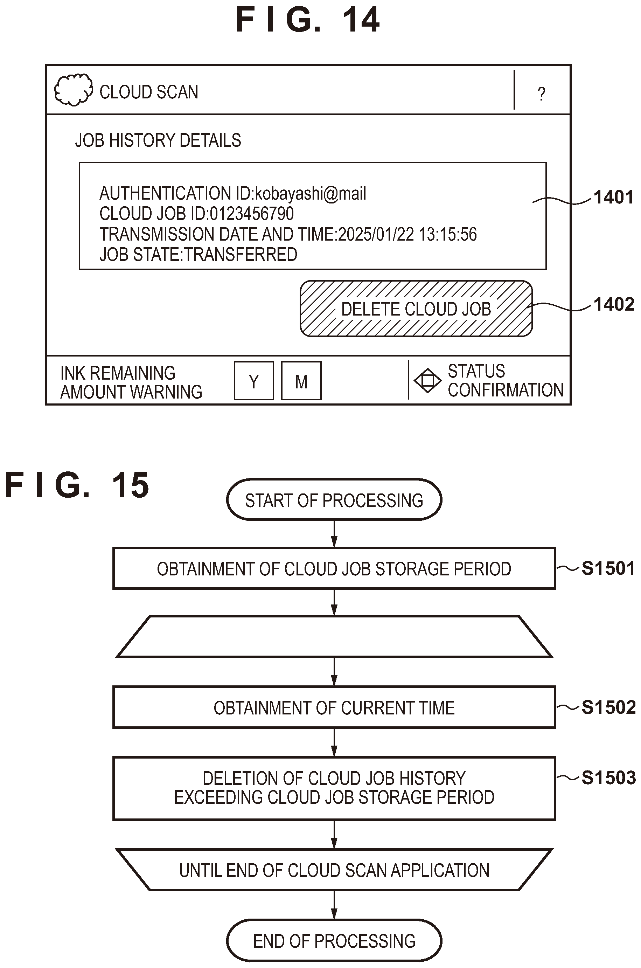

In step S1303, the cloud scan application 304 displays a cloud job history detail screen on the display unit 207 with use of the screen control unit 301. FIG. 14 exemplarily shows a cloud job history detail screen according to the second modification example. The cloud job history detail screen shown in FIG. 14 includes a cloud job detail display area 1401 for displaying cloud job history information. Also, the cloud job history detail screen includes a cloud job deletion button 1402 for deleting a cloud job corresponding to a cloud job ID displayed in the cloud job detail display area 1401. The cloud job detail display area 1401 displays, for example, a cloud authentication ID, a cloud job ID, a transmission date and time, and a job state.

Also, FIG. 14 shows an example in which the cloud job deletion button 1402 has been set to be displayed in a grayed-out style in step S1302 so as not to accept a pressing operation, and the cloud scan application 304 controls the display of the cloud job deletion button 1402 with use of this setting. The reason why the display is controlled in this way is because, for example, in a case where the image data has already been transferred to the cloud storage 102, it is pointless for the cloud scan application 304 to accept an operation of pressing the cloud job deletion button 1402. Then, processing proceeds to step S518.

As steps S518 to S520 according to the second modification example are similar to steps S518 to S520 according to the embodiment, a description thereof is omitted.

### <One Aspect of Mechanisms and Advantageous Effects>

In the information processing system 10 according to the second modification example, display of the cloud job deletion button 1402 is controlled in accordance with a state of a cloud job. This can suppress a situation in which an instruction for deleting the cloud job becomes pointless after accepting the instruction even though the cloud job has not been stored in the device storage of the cloud scan service 103. Also, it is no longer necessary for the CPU of the cloud scan service 103 to determine whether the cloud job is in a state where it has been stored in the device storage when the instruction for deleting the cloud job has been received. Furthermore, as the cloud job deletion button 1402 is displayed in such a manner that it cannot be pressed, the user can easily recognize whether the cloud job can be deleted. Therefore, usability is improved.

### (Third Modification Example)

The embodiment has been described in relation to exemplary operations of the information processing system 10 for storing cloud job histories sequentially into the image processing apparatus 105. However, the resource size of the HDD 209 is limited, and it is not realistic to keep storing all cloud job histories. In view of this, a third modification example exemplarily presents operations of the information processing system 10 that stores cloud job histories of the image processing apparatus 105 for a period that is the same as a cloud job storage period. Note that the following mainly describes the differences between the embodiment and the third modification example.

Processing related to a cloud scan executed by the image processing apparatus 105 according to the third modification example will be described using FIG. 15. Note that the flowchart of FIG. 15 is realized by the CPU 201 of the image processing apparatus 105 reading out programs for realizing each software module, which are stored in the ROM 202 or the HDD 209, to the RAM 203, and executing the programs. Also, the present flowchart is executed as a thread different from processing shown in FIG. 5 at the time of activation of the cloud scan application 304, and steps S1502 to S1503 are processing that is continued repeatedly until the cloud scan application 304 is ended.

In step S1501, with use of the communication unit 204, the cloud scan application 304 makes a request for obtainment of the cloud job storage period to the cloud scan service 103. In response to this request, the CPU of the cloud scan service 103 reads out the pre-set cloud job storage period in a state where it has been stored in the device storage with use of the communication module. Then, the CPU of the cloud scan service 103 transmits the cloud job storage period that has been read out to the image processing apparatus 105 with use of the communication module. Then, the cloud scan application 304 receives this cloud job storage period, and stores the same into the RAM 203. It is assumed here that the cloud job storage period is, for example, three days.

In step S1502, the cloud scan application 304 obtains a current time and stores the same into the RAM 203. More specifically, the cloud scan application 304 obtains the current time from a Network Time Protocol (NTP) server with use of the communication unit 204. Note that in the following description, it is assumed that the current time is 2025/1/24 07:50:40.

In step S1503, the cloud scan application 304 deletes, from the cloud job history table 800, a cloud job history in a state where it has been stored in the HDD 209 longer than the cloud job storage period. Specifically, the cloud scan application 304 calculates a storage period of a cloud job history in a state where it has been stored in the HDD 209 with use of the transmission date and time in the cloud job history table 800 and the current time stored in step S1502. Then, the cloud scan application 304 determines whether the calculated storage period exceeds the cloud job storage period received from the cloud scan service 103 in step S1501. Then, in a case where the calculated storage period exceeds the cloud job storage period received from the cloud scan service 103 in step S1501, the corresponding cloud job history is deleted.

For example, assume that the current time is 2025/1/24 07:50:40, and the cloud job storage period received from the cloud scan service 103 is three days. In this case, a piece of history information to be deleted among the pieces of history information included in the cloud job history table 800 shown in FIG. 8 is a piece of history information stored in the record 804. FIG. 16 exemplarily shows a cloud job history table 1600 after such a piece of history information has been deleted. Thereafter, processing returns to step S1502, and steps S1502 and S1503 are executed repeatedly until the cloud scan application 304 is ended.

### <One Aspect of Mechanisms and Advantageous Effects>

In the information processing system 10 according to the third modification example, the image processing apparatus 105 can store cloud job history information in accordance with a period in which cloud jobs are stored in the cloud scan service 103. Therefore, a shortage of free space in the HDD 209 can be suppressed, and consequently, the occurrence of a defect in the image processing apparatus 105 can be suppressed.

### Other Embodiments

Embodiment(s) of the present disclosure can also be realized by a computer of a system or apparatus that reads out and executes computer executable instructions (e.g., one or more programs) recorded on a storage medium (which may also be referred to more fully as a 'non-transitory computer-readable storage medium') to perform the functions of one or more of the above-described embodiment(s) and/or that includes one or more circuits (e.g., application specific integrated circuit (ASIC)) for performing the functions of one or more of the above-described embodiment(s), and by a method performed by the computer of the system or apparatus by, for example, reading out and executing the computer executable instructions from the storage medium to perform the functions of one or more of the above-described embodiment(s) and/or controlling the one or more circuits to perform the functions of one or more of the above-described embodiment(s). The computer may comprise one or more processors (e.g., central processing unit (CPU), micro processing unit (MPU)) and may include a network of separate computers or separate processors to read out and execute the computer executable instructions. The computer executable instructions may be provided to the computer, for example, from a network or the storage medium. The storage medium may include, for example, one or more of a hard disk, a random-access memory (RAM), a read only memory (ROM), a storage of distributed computing systems, an optical disk (such as a compact disc (CD), digital versatile disc (DVD), or Blu-ray Disc (BD)^{™}), a flash memory device, a memory card, and the like.

Various embodiments have been described in detail above but it will be understood that the present disclosure is not limited to these embodiments and encompasses all modifications, variants, alternatives and equivalents falling within the scope of the appended claims.

## Claims

1. An image processing apparatus comprising:
image obtaining means (208) for obtaining image data; and
first outputting means (204, 304) for outputting the image data which the image obtaining means obtained, a device token, and a cloud authentication identifier to a cloud server that provides a cloud scan service, the device token authorizing uploading of the image data to the cloud server, and the cloud authentication identifier being for confirming user authentication registration in authentication of the cloud scan service, wherein
the first outputting means further outputs, to the cloud server, an instruction for deleting a cloud job corresponding to the output image data which the first outputting means output, the instruction for deleting the cloud job including
a cloud job identifier that identifies, in the cloud server, the cloud job corresponding to the instruction for deleting,
the device token, and
the cloud authentication identifier.

2. The image processing apparatus according to claim 1, further comprising:
first obtaining means (201) for obtaining the cloud job identifier from the cloud server; and
storage controlling means (201) for storing the obtained cloud job identifier, wherein
the cloud job identifier that the first outputting means outputs to the cloud server together with the instruction for deleting the cloud job includes the cloud job identifier in a stored state by the storage controlling means.

3. The image processing apparatus according to claim 2, wherein
storing of the cloud job identifier includes storing the cloud job identifier in association with the cloud authentication identifier and a time at which the image data was output to the cloud server.

4. The image processing apparatus according to claim 3, further comprising displaying means (207) for displaying an authentication screen for authenticating a user who is to use the image processing apparatus, wherein
storing of the cloud job identifier includes storing the cloud job identifier in association with the cloud authentication identifier, the time, and a user ID input to the authentication screen.

5. The image processing apparatus according to claim 4, wherein
the image obtaining means includes a reading means for obtaining the image data by reading an image formed on a sheet, wherein
the displaying means further displays a first screen, wherein
the first screen includes
the cloud authentication identifier,
a first object for causing the reading means to start reading of the image data, and
a second object for displaying a history which the first outputting means output the image data to the cloud server.

6. The image processing apparatus according to claim 5, further comprising accepting means (304) for accepting a selection of the first object included in the first screen; wherein
the displaying means further displays, in a case where the accepting means accepted the selection of the first object, a second screen including a message that prompts confirmation of the cloud authentication identifier included in the first screen.

7. The image processing apparatus according to claim 6, wherein
the accepting means further accepts a selection of the second object included in the first screen, wherein
the displaying means further displays, in a case where the accepting means accepted the selection of the second object, a third screen including a third object for selecting a history of output of the image data to the cloud server, wherein
the third object includes display of the cloud job identifier and the time which the storage controlling means stored.

8. The image processing apparatus according to claim 7, wherein
the accepting means further accepts a selection of the third object included in the third screen, wherein
the display means further displays, in a case where the accepting means accepted the selection of the third object, a fourth screen including a history corresponding to the selected third object, and a fourth object for issuing an instruction for deleting the cloud job, wherein
the history includes the cloud authentication identifier, the cloud job identifier associated with the user ID which the storage means stored, and the time at which the first outputting means output the image data to the cloud server.

9. The image processing apparatus according to claim 8, wherein
the display means further displays a fifth screen, wherein
the fifth screen includes
a fifth object for inputting the cloud authentication identifier, and
a sixth object for confirming a status of processing in the image processing apparatus, wherein
in a case where the accepting means further accepted information input to the fifth object, the first obtaining means obtains the information as the cloud authentication identifier.

10. The image processing apparatus according to claim 9, wherein
the accepting means further accepts a selection of the sixth object included in the fifth screen, wherein
the display means further displays in a case where the accepting means accepted the selection of the sixth object, a sixth screen including a seventh object for displaying a transmission history, wherein
the display means further displays, in a case where the accepting means further accepted a selection of the seventh object included in the sixth screen, a seventh screen including an eighth object and a ninth object, the eighth object being for selecting a transmission history of the cloud job and indicating the time of transmission of the cloud job to the cloud server, and the ninth object indicating a job other than the cloud job, wherein
the display means further displays, in a case where the accepting means accepted a selection of the eighth object, the fourth screen, wherein
the history included in the fourth screen includes a history corresponding to the selected eighth object.

11. The image processing apparatus according to any one of claims 8 to 10, wherein
the first obtaining means further obtains, in a case where the accepting means accepted the selection of the third object, a state of the cloud job, wherein
the display means displays, in an identifiable manner, whether the fourth object is selectable, in accordance with the state of the cloud job which the first obtaining means obtained.

12. The image processing apparatus according to claim 11, wherein
states of the cloud job include
a state in which the image data has not been transferred from the cloud server to a cloud storage,
a state in which the image data was transferred from the cloud server to the cloud storage,
a state in which processing related to the cloud job ended due to an error,
a state in which the cloud job was cancelled, and
a state in which the cloud job was deleted from the cloud server.

13. The image processing apparatus according to any one of claims 3 to 12, wherein
the first obtaining means further obtains a storage period of the cloud job in the cloud server; wherein
in a case where a storage period of the cloud job identifier stored in the image processing apparatus exceeds the storage period which the first obtaining means obtained, the storage controlling means deletes the cloud job identifier and the cloud authentication identifier and the time that were stored in association with the cloud job identifier.

14. A control method for an image processing apparatus, comprising:
obtaining image data;
outputting the obtained image data, a device token, and a cloud authentication identifier to a cloud server that provides a cloud scan service, the device token authorizing uploading of the image data to the cloud server, and the cloud authentication identifier being for confirming user authentication registration in authentication of the cloud scan service; and
outputting, to the cloud server, an instruction for deleting a cloud job corresponding to the output image data, the instruction for deleting the cloud job including
a cloud job identifier that identifies, in the cloud server, the cloud job corresponding to the instruction for deleting,
the device token, and
the cloud authentication identifier.

15. A non-transitory computer-readable storage medium storing a computer program for causing a computer to execute each step in a control method for an image processing apparatus, the control method comprising:
obtaining image data;
outputting the obtained image data, a device token, and a cloud authentication identifier to a cloud server that provides a cloud scan service, the device token authorizing uploading of the image data to the cloud server, and the cloud authentication identifier being for confirming user authentication registration in authentication of the cloud scan service; and
outputting, to the cloud server, an instruction for deleting a cloud job corresponding to the output image data, the instruction for deleting the cloud job including
a cloud job identifier that identifies, in the cloud server, the cloud job corresponding to the instruction for deleting,
the device token, and
the cloud authentication identifier.
